# EUROPEAN PATENT APPLICATION

(11) **EP 1 731 059 A1**
(43) Date of publication of application: **13.12.2006**
(21) Application number: 05721300.1
(22) Date of filing: 23.03.2005
(51) Int. Cl.: A47C 7/74, B60H 1/00

(54) **SEAT FOR VEHICLE**

(30) Priority: 31.03.2004 JP 2004102620
(71) Applicant: TS Tech Co., Ltd, Asaka-shi, Saitama 351-0012 (JP)
(72) Inventor: ISHIMA, Shinya c/o TS TECH CO., LTD., Tochigi 329-1217 (JP); NAGAYAMA, Masaki c/o TS TECH CO., LTD., Tochigi 329-1217 (JP)
(74) Representative: Khan, Mohammed Saiful Azam
(86) International application number: PCT/JP2005/005250
(87) International publication number: WO 2005/096893

(57) **Abstract**

A vehicle seat of the present invention has a seat cushion and a seat back formed by covering a surface of a seat pad with a top cover member, a plurality of air holes which penetrate the seat pad to reach a surface of the top cover member, a plurality of air outlets which project from a surface of a duct to be connected to the air holes, and an air blower to pressure and feed air inside a vehicle compartment to the air holes through the duct and the air outlets. Further, a member which has an elastic modulus larger than that of the seat pad forming the seat cushion is interposed between the seat cushion and the duct.

## Description

### Technical Field

The present invention relates to a vehicle seat having an air conditioning function.

### Background Art

Recently, there is known a vehicle seat having an air conditioning function in which a plurality of air holes are provided in a top cover member of a seat cushion and a seat back of the vehicle seat, and air from an air blower is ejected from the air holes (For example, see Patent Document 1).
The vehicle seat disclosed in Patent Document 1 is schematically configured such that the plurality of air holes are provided to penetrate a top cover member, a cover pad and a pad forming the seat cushion and the seat back, an air blower, an intermediate duct and a seat cushion air exhaust duct are arranged on a lower surface of the seat cushion, and a seat back air exhaust duct is arranged on a back surface of the seat back.
A plurality of air outlets which slightly project from the surface to engage with the inside of the air holes are formed on the seat cushion air exhaust duct and the seat back air exhaust duct. The air from the air blower is fed to the seat cushion air exhaust duct and the seat back air exhaust duct through the intermediate duct, and is then ejected from the air holes connected to the air outlets to the seat surface.
Patent Document 1: JP-Tokukaihei-10-297274

### Disclosure of the Invention

### Problem to be Solved by the Invention

However, in a vehicle seat having a normal air conditioning function including one disclosed in Patent Document 1, the duct is arranged at the lower surface of the seat cushion, so that when a passenger sits in or pushes a pedal, the passenger may feel uncomfortable due to the duct, thereby losing a comfortable feeling to sit in, or damaging the duct due to the impact by the weight of the passenger's body.

The present invention has been achieved in view of the above problem, and an object of the present invention is to provide a vehicle seat which is capable of suppressing deterioration of comfortable feeling when sitting in the seat due to a duct arranged on a lower surface of a seat cushion.

### Means for Solving the Problem

To solve the above problem, in accordance with the first aspect of the present invention, the vehicle seat of the present invention comprises:
a seat cushion and a seat back formed by covering a surface of a seat pad with a top cover member;
a plurality of air holes which penetrate the seat pad to reach a surface of the top cover member;
a plurality of air outlets which project from a surface of a duct to be connected to the air holes; and
an air blower to pressure and feed air inside a vehicle compartment to the air holes through the duct and the air outlets,
wherein a member which has an elastic modulus larger than that of the seat pad forming the seat cushion is interposed between the seat cushion and the duct.

According to the vehicle seat, a member which has elastic modulus larger than that of the seat pad forming the seat cushion is interposed between the seat cushion and the duct, so that in the case where the front portion of the seat cushion is deformed due to the downward compressing force from a thigh of a passenger when the passenger sits in or pushes a pedal, the member is elastically deformed to encompass the circumference of the duct. Thus, the passenger does not feel uncomfortable due to the interposed duct, thereby enabling to prevent to lose a comfortable feeling when sitting in the seat, and absorbing the impact to the duct by the weight of the passenger. Further, deformation of the front portion of the seat cushion in the vertical direction (vertical stroke) can be secured due to the elastic deformation of the member.

Preferably, in the vehicle seat of the present invention, the seat pad comprises an elastomeric resin formed by a foamed polyurethane or a flexible urethane foam, the member having an elastic modulus larger than that of the seat pad is formed by an elastomeric resin which is formed by a foamed polyurethane or a flexible urethane foam having an elastic modulus larger than that of the foamed polyurethane or the flexible urethane foam used for the seat pad.

According to the vehicle seat, the seat pad comprises elastomeric resin formed by foamed polyurethane or flexible urethane foam, and the member having elastic modulus larger than that of the seat pad is formed by elastomeric resin which is formed by foamed polyurethane or flexible urethane foam having elastic modulus larger than that of the foamed polyurethane or the flexible urethane foam used for the seat pad, so that the structure capable of obtaining the effect specifically described above can be applied.

### Effect of the Invention

According to the present invention, a vehicle seat which is capable of suppressing deterioration of comfortable feeling when sitting in the seat due to the duct arranged on the lower surface of the seat cushion can be obtained.

### Brief Description of the Drawings

[FIG. 1] This is a perspective view showing an outline of a vehicle seat.
[FIG. 2] This is a longitudinal sectional view of a main portion showing a structure of a seat back.
[FIG. 3] This is a perspective view showing a framework structure of the seat cushion side of the vehicle seat.
[FIG. 4] This is a perspective view showing the framework structure of the seat cushion side of the vehicle seat.
[FIG. 5] This is a longitudinal sectional view of a main portion showing an arrangement of a high modulus member.
[FIG. 6] This is a perspective view showing a framework structure of the seat back side of the vehicle seat.

### Best Mode for Carrying Out the Invention

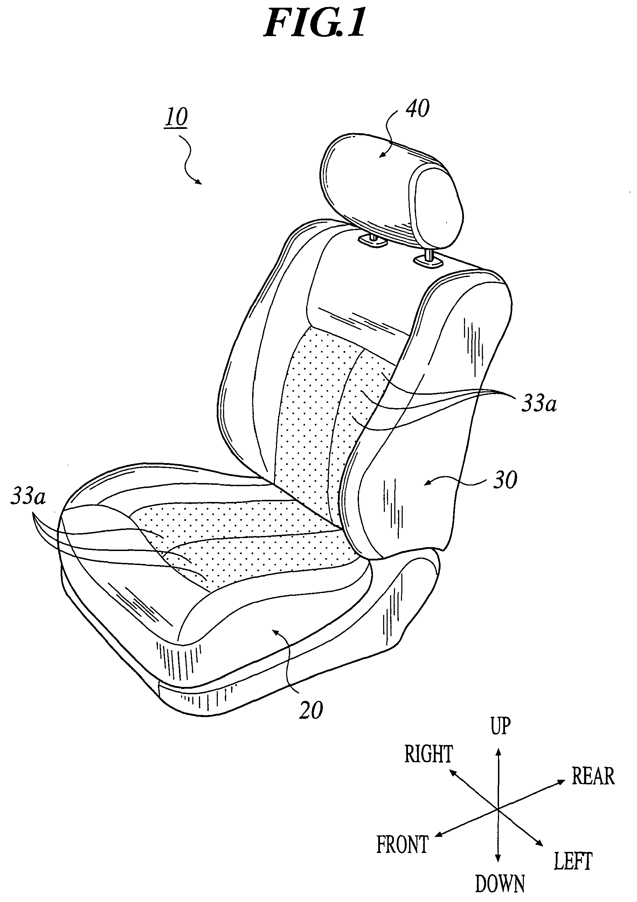

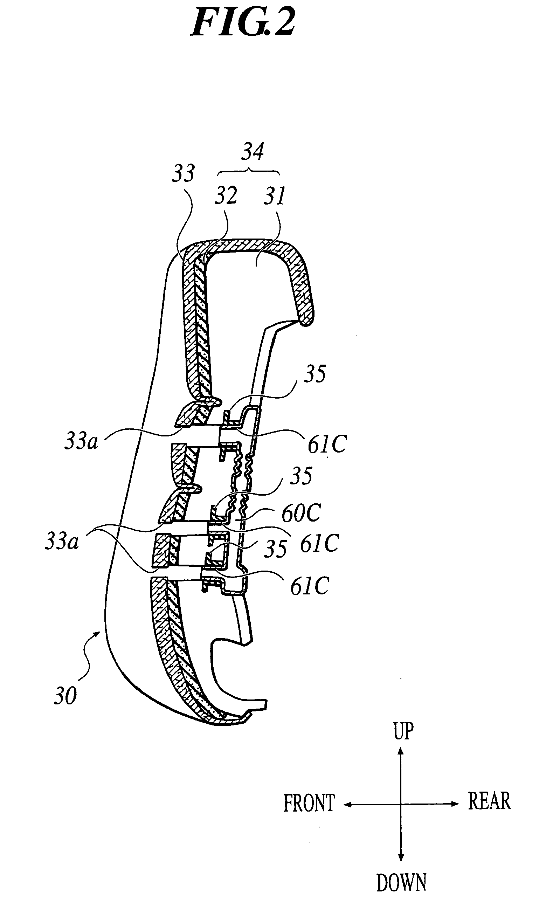

The preferred embodiments for embodying the present invention will be explained in detail below referring to the drawings.
As shown in FIG. 1, a vehicle seat 10 is schematically configured to comprise a seat cushion 20, a seat back 30, a head rest 40 provided on the upper portion of the seat back 30 and the like. Among them, as shown in FIG. 2, the seat back 30 is configured such that a surface of a pad 31 which keeps a seat shape and functions as a cushion member is covered with a cover pad 32 with permeability, and the surface of the cover pad 32 is further covered with a top cover member 33. FIG. 2 shows the seat back 30, however, similarly, the seat cushion 20 is also configured such that the surface of the pad 31 is covered with the cover pad 32 and the top cover member 33. Hereinafter, the combination of the pad 31 and the cover pad 32 is described as a "seat pad 34".
There are a plurality of air holes 33a formed in the surface of the top cover member 33. As shown in FIG. 2, each air hole 33a is connected to an air outlet 61C on the surface of the duct 60C.

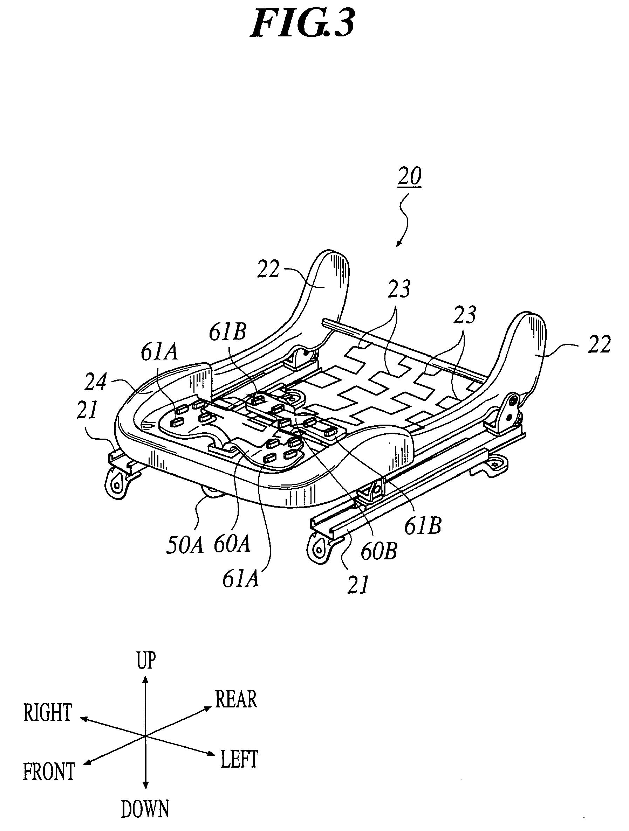

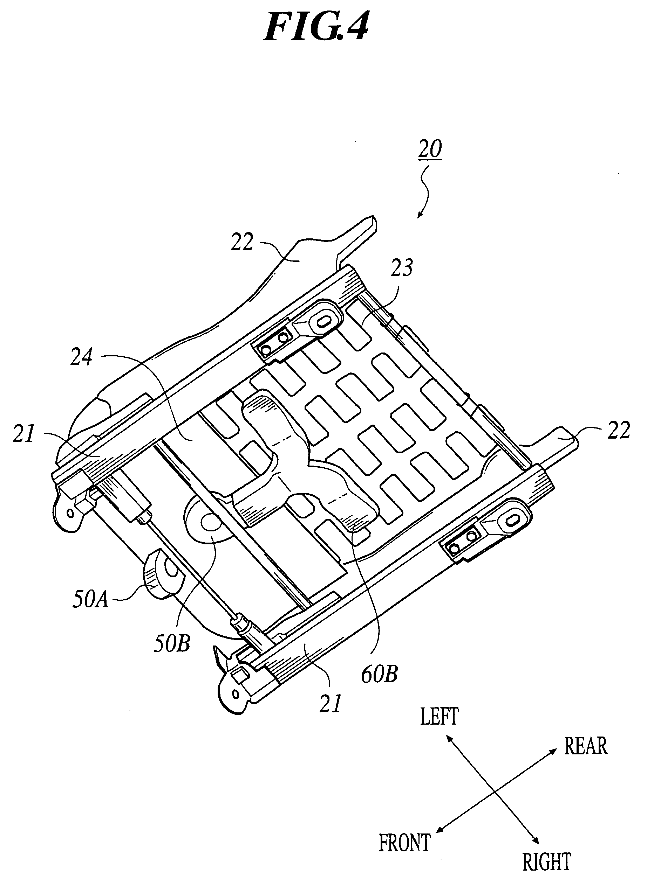

FIG. 3 is a perspective view showing a framework structure of the seat cushion 20 side of the vehicle seat 10, and FIG. 4 is a perspective view of the framework structure as seen from the lower surface side.
The framework structure of the seat cushion 20 side is schematically configured to comprise a pair of right and left seat rails 21, a pair of right and left seat frames 22 attached to the seat rails 21, seat springs 23, a pan frame 24 which is crossed over the seat springs 23 and the front portions of the seat frames 22, and the like.

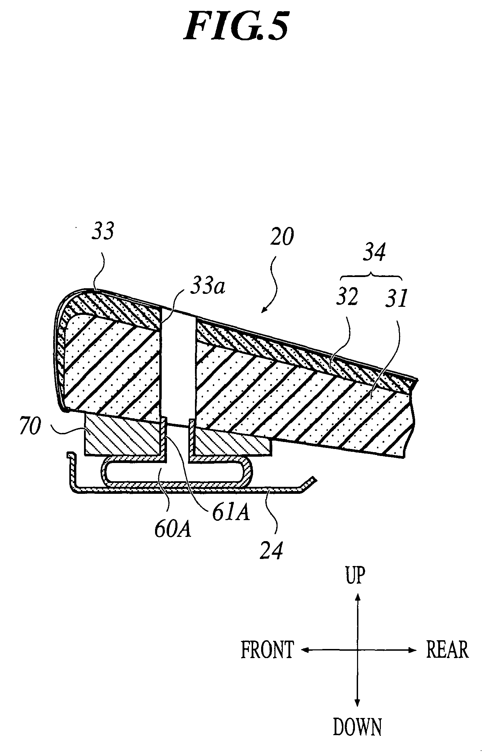

As shown in FIG. 4, air blowers 50A and 50B for the seat cushion 20 are attached to the front and center of the lower surface of the pan frame 24, respectively.
As shown in FIG. 5, a member 70 (hereinafter, refer to "high modulus member 70") having elastic modulus higher than that of the seat pad 34 (the pad 31 and the cover pad 32) forming the seat cushion 20 is interposed between a duct 60A and the seat cushion 20.
As the pad 31 and the cover pad 32, for example, one which is formed by integrally molding elastomeric resin such as closed cell type or open cell type foamed polyurethane or flexible urethane foam to conform to the seat shape is used, or an assembly of elastomeric resins which are molded into particles is used. The high modulus member 70 used in the present invention is also formed with elastomeric resin such as closed cell type or open cell type foamed polyurethane or flexible urethane foam, however, the elastic modulus thereof is higher than that of the elastomeric resin used in the pad 31 and the cover pad 32.

As shown in FIG. 4, a duct 60B connected to the air blow hole of the central (back) air blower 50B extends backward on the lower surface side of the pan frame 24, and branches off in right and left direction.
A plurality of tubular air outlets 61A, 61B are provided to project upward at the positions on the upper surfaces of the ducts 60A, 60B corresponding to the plurality of air holes 33a.

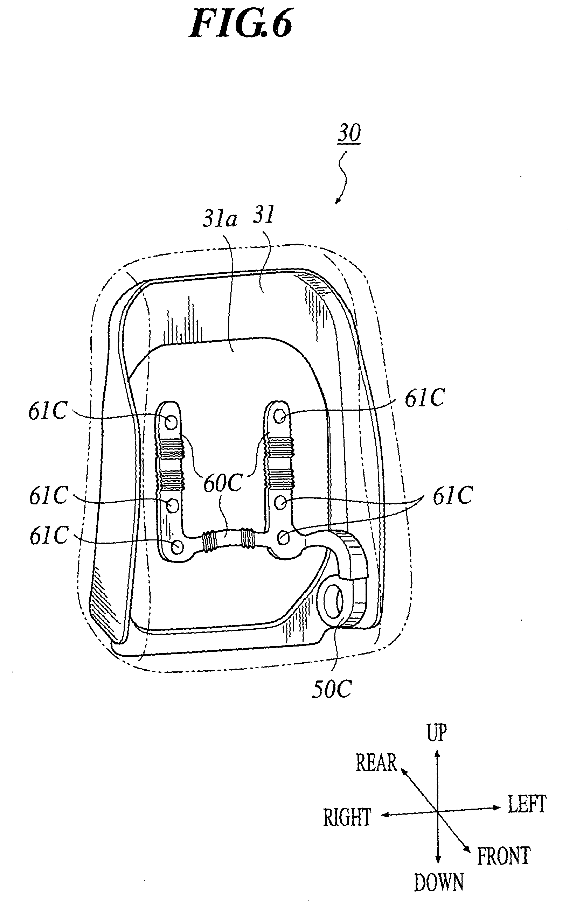

FIG. 6 is a back view of the seat back 30, and the seat back 30 is schematically configured to comprise a sub seat frame 31 having an opening 31a in the center, a seat spring (omitted from the drawings) attached to the sub seat frame 31 and the like.

An air blower 50C for the seat back is attached to one of the right and left lower sides of the back surface of the sub seat frame 31.
A duct 60C connected to the air blow hole of the air blower 50C extends upward from the right and left positions in the opening 31a of the sub seat frame 31.
At the positions corresponding to the plurality of air holes 33a on the front surface of the duct 60C, similar to the above seat cushion 20 side, a plurality of tubular air outlets 61C are provided to project upward.
The air outlets 61A, 61B, 61C of the seat cushion 20 side and the seat back 30 side engage the insides of the air holes 33a of the seat cushion 20 side and the seat back 30 side, respectively.

As above, according to the vehicle seat 10 of the present invention, the high modulus member 70 is interposed between the seat cushion 20 and the duct 60A, so that in the case where the front portion of the seat cushion 20 is deformed due to the downward compressing force from a thigh of a passenger when the passenger sits in or pushes a pedal, the passenger does not feel uncomfortable due to the interposed duct 60A, thereby enabling to prevent to lose a comfortable feeling when sitting in the seat, and absorbing the impact to the duct 60A by the weight of the passenger's body. Further, enough deformation of the front portion of the seat cushion 20 in the vertical direction (stroke in the vertical direction) can be secured due to the elastic deformation of the high modulus member 70.

Moreover, in the present invention, the seat pad 34 is formed with elastomeric resin formed by foamed polyurethane or flexible urethane foam, and a member having elastic modulus higher than that of the seat pad 34 is formed with elastomeric resin formed by foamed polyurethane or flexible urethane foam having elastic modulus higher than that of the foamed polyurethane or flexible urethane foam used in the seat pad 34. Thus, the structure capable of obtaining the effect specifically described above can be applied.

The present invention is not limited to the above embodiment, and various improvements and design changes may be made without departing from the scope of the invention.

### Industrial Applicability

As above, the vehicle seat according to the present invention is useful as a seat mounted on the vehicle such as an automobile or the like, especially, the vehicle seat is suitable as a seat to give comfortable feeling to a passenger when the passenger sit in.

## Claims

1. A vehicle seat comprising:
a seat cushion and a seat back formed by covering a surface of a seat pad with a top cover member;
a plurality of air holes which penetrate the seat pad to reach a surface of the top cover member;
a plurality of air outlets which project from a surface of a duct to be connected to the air holes; and
an air blower to pressure and feed air inside a vehicle compartment to the air holes through the duct and the air outlets,
wherein a member which has an elastic modulus larger than that of the seat pad forming the seat cushion is interposed between the seat cushion and the duct.

2. The vehicle seat as claimed in claim 1, wherein the seat pad comprises an elastomeric resin formed by a foamed polyurethane or a flexible urethane foam, the member having an elastic modulus larger than that of the seat pad is formed by an elastomeric resin which is formed by a foamed polyurethane or a flexible urethane foam having an elastic modulus larger than that of the foamed polyurethane or the flexible urethane foam used for the seat pad.
